Europäisches Patentamt

European Patent Office

Office européen des brevets

(11) Publication number: **0 178 276**
**A2**

# (12) EUROPEAN PATENT APPLICATION

(21) Application number: **85850313.9**

(51) Int. Cl.⁴: **H 02 P 8/00**

(22) Date of filing: **07.10.85**

(30) Priority: **09.10.84 US 658775**

(43) Date of publication of application: **16.04.86**
**Bulletin 86/16**

(84) Designated Contracting States: **AT DE FR GB IT SE**

(71) Applicant: **ESAB Aktiebolag, Box 8004 Herkulesgatan 72, S-402 77 Göteborg (SE)**

(72) Inventor: **Fellinger, Michael W., 1590 Quince Avenue, Boulder Colorado 80302 (US)**

(74) Representative: **Frisch, Kurt, c/o ESAB AB Box 8004, Herkulesgatan 72 S-402 77 Göteborg (SE)**

(54) **Motor drive/control circuit.**

(57)    A motor drive/control circuit is provided for transferring energy in the form of current from a first motor winding (42) to a subsequently excited second motor winding (44). The circuit includes a common inductor (50) which is electrically connected at both of its sides to both of the motor windings (42, 44). The circuit further includes a number of diodes (54, 56, 58, 60), each of which is electrically connected to the upstream side of the common inductor (50). A number of switch units (62, 64, 66, 68) are electrically connected to the motor windings for use in controlling movement of the motor shaft. After the opening of a first switch unit, a primary current passes through a first motor winding, and with the closing of a second switch unit, a secondary current passes through the first motor winding. At least a portion of the secondary current is transferred to the second motor winding. This transfer of energy minimizes the dissipation of energy in the motor and increases the efficiency of the motor.

MOTOR DRIVE/CONTROL CIRCUIT

Field of the Invention

The present invention relates to an energy controlling circuit used in connection with a motor and, in particular, to a stepping motor drive/control circuit for minimizing energy losses in the stepping motor.

Background Information

In controlling the application of power to a stepping motor, various circuits have been devised to provide discrete current inputs to the windings of the motor for use in causing desired movements of the motor shaft. Such circuits are intended to solve a number of problems associated with stepping motor operation. Nonetheless, a major concern that still remains regarding stepping-like motors is the loss or waste of energy that occurs as a result of the excitation of different windings according to a desired sequence using a stepping motor drive circuit. That is, in supplying current through a first winding, energy is dissipated when that first winding is no longer excited and a second winding is turned on. Instead of losing the energy which remains in the first winding after it is turned off or no longer excited, due to the magnetic field that was created, it would be desirable to make use of that energy in other parts of the motor. Specifically, it would be advantageous to use the energy present in the first winding by transferring or providing at least some of that energy which remains to the second winding, which is next energized by the supplied power. Less energy would then be required from the supplied power to excite the next winding. In known stepping motor drive circuits, after the excitation is removed, the energy in the winding is simply dissipated in a resistive element or a choke. There is no electrical connection which permits a transfer of energy from a first winding to a second winding. The drive/ control circuit of the present invention was created to permit the transfer or delivery of energy remaining in a winding to another winding in a bifilar stepping motor and thereby minimize energy dissipation in the motor. In accomplishing this primary task, the circuit of the present invention also resulted in a substantial reduction in the weight of the electrical and mechanical stepping motor assembly. In conventional systems, a large, heavy transformer is used in supplying power to the stepping motor. The drive/control circuit disclosed herein does not require such a transformer but relies on the circuit itself to provide the necessary voltage level, and concomitantly the necessary current to the motor windings. As a result, the weight of the stepping motor system is significantly minimized because a heavy transformer is not used.

## Summary of the Invention

A stepping motor drive/control circuit is disclosed in which energy is transferred from a previously excited motor winding to a subsequently excited motor winding to minimize energy dissipation in the motor and thereby maximize the power efficiency of the motor. The drive/ control circuit includes a common inductor or choke which is electrically connected at both of its ends or sides to both windings of a bifilar stepping motor. A first side of the common inductor is connected to each of the two motor windings through a catch diode. The second side of the common inductor is connected to each of the center taps of the two motor windings. As in conventional stepping motor systems, the motor windings are electrically connected to a number of controlled switch means or units. In connection with the two motor windings, each comprises two coils. As a consequence, four switch units are provided, one of the four coils being electrically connected to one of the four switch units. The switch units are operably connected to a controller which controls the opening and the closing of the switch units in a predetermined manner. The manner of opening and closing the switch units is intended to generate a sinusoid-shaped motor current. This current is detected using a sensing resistor which communicates with a controller. The controller opens and closes the switch units based on the current sensed.

In transferring energy from a previously energized first motor winding to a subsequently energized second motor winding, with the opening of the switch unit electrically connected to an energized first motor winding, a primary current is generated which passes through the first motor winding due to the collapsing magnetic field associated therewith. The primary current passes through the catch diode in electrical communication with the first winding, and which catch diode is now forward biased by the back emf of the common inductor and the previously energized coil. The primary current also passes through the common inductor. Simultaneously with the closing of a second switch unit electrically connected to a second motor winding to be energized, a secondary current path is created in the opposite direction through the first winding to the second winding, which enables the energy of the first winding to be transferred to the second winding. This path for secondary current also includes the same catch diode, with the current of the secondary path being less in magnitude than the current through the primary path so that the resulting current through the catch diode is in the direction from the anode to the cathode of the catch diode.

In view of the foregoing, a number of advantages of the present invention are readily discerned. A stepping motor drive/control circuit is provided which makes use of energy present in a previously excited motor winding by transferring such existing energy to another winding of the motor. Such a transfer of energy improves the efficiency of the motor since less energy is required from the supplied power to properly energize a motor winding coil. In accomplishing this main objective, a common inductor is used that results in the further advantage of reducing the weight of the motor assembly in that a heavy transformer is not required to receive the line voltage which provides power to the motor. Relatedly, the common inductor of the inventive circuit enables a large, rectified supply voltage to be applied to the circuit so that a sufficiently large current is generated in the motor windings.

Additional advantages of the present invention will become readily apparent from the following discussion when taken in conjunction with the accompanying drawings.

Brief Description of the Drawings

Fig. 1 is an electrical schematic of a prior art, conventional drive/control circuit;

Fig. 2 is an electrical schematic of the motor drive/control circuit of the present invention; and

Fig. 3 illustrates a portion of the electrical schematic of the present invention showing a primary current path and a secondary current path associated with the opening of one switch and closing of another switch.

Detailed Description of a Preferred Embodiment

In accordance with the present invention, a drive/control circuit is provided for use with a stepping motor having at least two windings. The present invention is characterized by the transfer of energy from a previously excited motor winding to a subsequently excited motor winding.

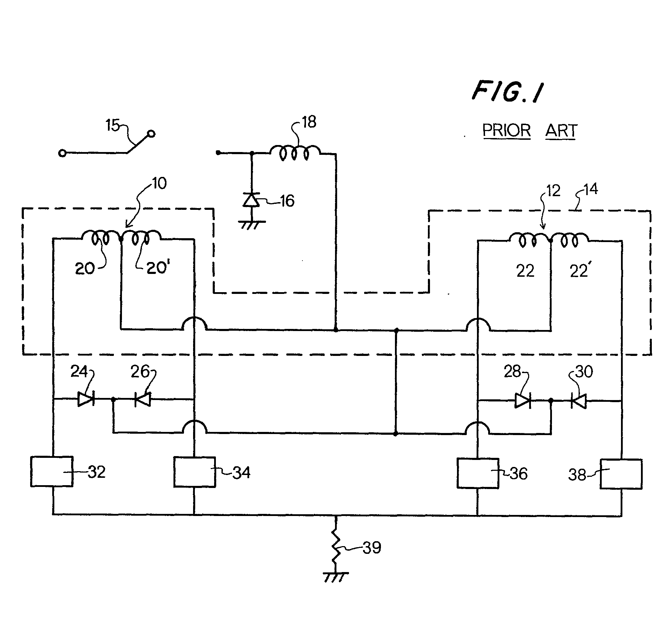

Conventional prior art stepping motor circuits do not permit the transfer of energy between windings. Consequently, all of the energy generated in one winding is essentially lost or dissipated when a second motor winding is energized or excited. Fig. 1 illustrates a prior art conventional drive circuit connected to two windings 10, 12 of a bifilar stepping motor 14. The supply voltage V is applied to a control switch 15 and rectified by a diode 16 and applied to a choke or inductor 18 whenever the control switch 15 is closed. Both the diode 16 and the inductor 18 are provided on the input or upstream side of the stepping motor 14. The windings 10, 12 include the coils 20, 20', and 22, 22', respectively, each of these coils being defined using the center tap of the windings 10, 12. One side of the inductor 18 is electrically connected to the center tap of each of the two windings 10, 12.

The drive control circuit of the prior art system includes four catch diodes 24, 26, 28, 30, each of which is used to prevent a direct current path from the inductor 18 to one of the switches 32, 34, 36, 38, one of which is normally closed during use of the stepping motor 14. The catch diodes 24-30 are also used to prevent the formation of a current path to a motor winding coil other than the desired winding coil which is to be energized. Each of the catch diodes 24-30 is electrically connected to the downstream side of the inductor 18. The prior art circuit also includes a sensing resistor 39 electrically connected to the switches 32-38.

The prior art circuit of Fig. 1 outputs a current to the sensing resistor 39 in a manner controlled by the control switch 15. In typical operation of such a stepping motor drive circuit, a current having a pulse waveform is generated in the motor windings 10, 12. The frequency of the pulse waveform corresponds to the frequency of the opening/closing of the control switch 15. Additionally, for more efficient operation, i.e., greater output of the stepping motor, more than one switch 32-38 is closed at any instance in time.  By way of example, swtiches 32, 36 are closed simultaneously so that greater power is generated by the motor 14.  Unlike the present invention, the prior art circuit of Fig. 1 does not transfer energy or current from a first winding to a second winding of the bifilar stepping motor.  This is seen from a description of the basic operation of this conventional circuit.  In particular, assume that only switch 32 is closed.  In such a case, current has a path through coil 20 of winding 10 and through the closed switch 32.  Consequently, winding 10 is energized by the current passing through the coil 20.  The catch diode 24 is reversed biased due to the application of the voltage applied to the cathode side of the catch diode 24 through the inductor 18.  With the opening of the switch 32 the catch diode 24 is no longer reverse biased but provides a current path therethrough for the energy existing in the winding 10.  However, this current path is restricted to the winding 10 and the catch diode 24, and no current path is provided to the other winding 12.  As a result, the current present in the winding 10 is dissipated in the winding 10.  The prior art circuit and the operation thereof do not result in the efficient use of the energy produced in the windings 10, 12.  Additionally, because the prior art circuit relies on a pulse current waveform being generated, the stepping motor shaft moves in discrete steps.  As the following discussion indicates, the present invention generates a sinusoidal current signal so that a relatively smooth motor shaft movement occurs.

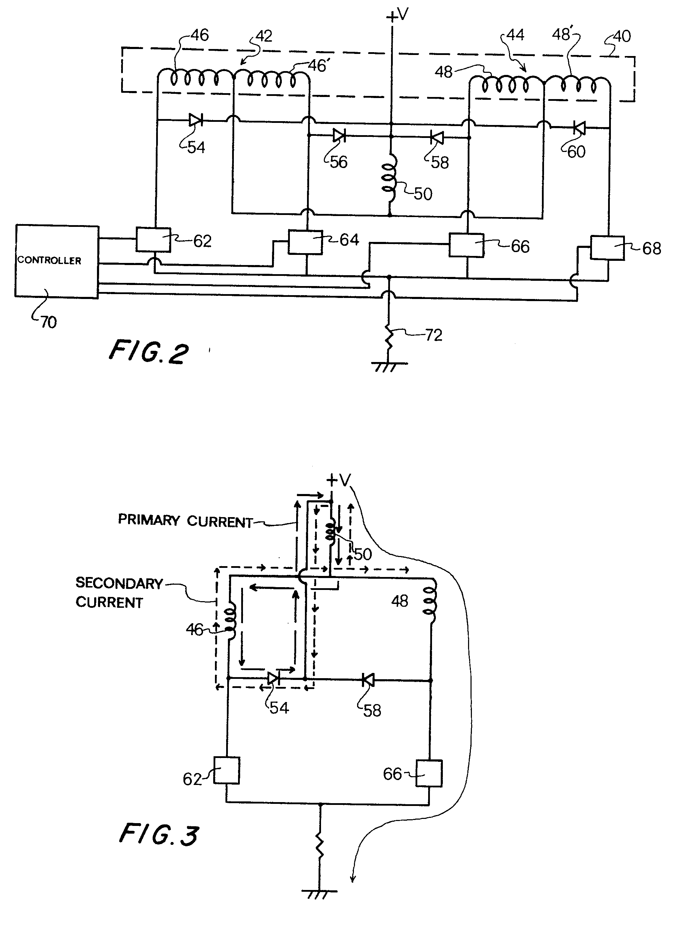

The present invention provides an apparatus for transferring the previously generated energy in a motor winding using, in a preferred embodiment, the combination

- 7 -

0178276

of elements illustrated in Fig. 2. With reference to Fig. 2, a bifilar stepping motor 40 is shown having a pair of windings 42, 44. The winding 42 comprises coils 46, 46' while winding 44 comprises coils 48, 48'. Coils 46, 46' are defined using a center tap electrically connected to a first or downstream side of a common inductor 50. The coils 48, 48' are also defined using a center tap electrically connected to the same first side of the common inductor 50. The common inductor 50 forms a part of the stepping motor drive/control circuit 52. The circuit 52 further includes catch diodes 54, 56, 58, 60, switch units 62, 64, 66, 68, a controller 70, and current sensing resistor 72. Each of the catch diodes 54-60 is electrically connected between a second or upstream side of the common inductor 50 and one of the coils 46, 46', 48, 48'. Each of the switch units 62-68 is electrically responsive to and in communication with one of the coils 46, 46', 48, 48'.

In one embodiment, each of the switch units 62-68 includes a Darlington transistor and a built in catch diode for circuit protection. The controller 70 is electrically connected to the switch units 62-68 and controls the opening and closing thereof. In the preferred embodiment, the controller 70 acts to close only one of the four switch units 62-68 at any one time, and the rate of closing one switch unit and opening a second switch unit is about 19.2 KHz. At this preferred rate of opening and closing the switch units 62-68, the stepping motor 40 acts like an AC synchronous motor. Particularly, because of the relatively fast rate at which the switch units 62-68 are opened and closed, as controlled by the controller 70, a sinusoidal current waveform is generated in the stepping motor 40 which results in a smooth movement of the motor shaft. In typical operation, the opening/closing of the switch units 62-68 is at a faster rate than the frequency of the sinusoidal current generated by the stepping motor 40. This is accomplished as the sinusoidal current is basically made up of a number of average currents present in the winding coils. Each average current is essentially an average magnitude of current present in the winding coil during the time one of the switch units 62-68 was closed. The frequency of the opening/closing of the switch units 62-68 is relatively fast so that the change in current in the winding coil due to the opening of a switch unit 62-68 is very small in comparison with the average current present in the coil during the opening/closing sequence. As a result of such switch unit opening/closing, the controller 70 is able to generate the desired, both in amplitude and frequency, sinusoidal current waveform for producing a desired motor shaft rotation. In one embodiment of the invention, for example, one period of the generated sinusoidal current results in a 7.2 degree movement of the motor shaft. Generally, as the frequency of the sinusoidal current signal increases, the rotational movement of the motor shaft increases also.

As can be seen by a comparison between the prior art circuit of Fig. 1 and the present invention illustrated in Fig. 2, significant configurational differences exist between the present invention and the prior art circuit and include the use of the common inductor 50 and the electrical connections between the upstream or second side of the common inductor 50 and the catch diodes 54-60. In this embodiment of the present invention, unlike the prior art circuit, this circuit configuration provides an electrical connection for transferring or steering energy or current from one winding to another winding of the stepping motor 40.

The common inductor 50 and the catch diodes 54-66, in conjunction with the opening and closing of the switch units 62-68, cause current to be removed from one winding 42, 44 and transferred to the other of the two windings 42 or 44. At relatively lower stepping rates (opening/closing of the switch units 62-68), current is not transferred most efficiently because the current in the stepping motor 40 is not constant due to the decay of the current over time between the opening of one switch unit 62-68 and the closing of another switch unit 62-68. Additionally, the inductance of the conductor 50 cannot be infinite. If it were, there would be no building up of current as a result of a switch unit closing, which closing and subsequent current build up act to overcome the variation in current due to the decaying current in another part of the stepping motor 40. Because the inductance of the common inductor 50 is finite then, instead of all energy or current being transferred from one winding to another winding, some of that current is dissipitated in the common inductor 50. As previously discussed the preferred rate of switch unit 62-68 closure is 19.2 KHz. At such a rate, the decay of the total motor current is minimized and a state exists wherein the stepping motor 40 is able to produce an essentially constant sinusoidal current permitting significant energy transfer between the two windings 42, 44.

The manner of achieving this energy transfer is next discussed with reference to Fig. 3. In particular, Fig. 3 shows a portion of the schematic representation of Fig. 2 in order to illustrate the current paths that result upon opening of the switch unit 62 and the subsequent closing of the switch unit 66. During the time that switch unit 62 is closed, coil 46 of the winding 42 is energized and current has a path from the rectified line voltage through the common inductor 50, the coil 46, the switch unit 62, and the sensing resistor 72. The current energizes or excites the coil 46 for use in causing a desired movement of the shaft of the stepping motor 40. With such control being provided by the controller 70, the switch unit 62 is opened and then the switch unit 66 is closed. With the opening of the switch unit 62, the winding 46 acts, at least to a first approximation, like a constant current source in that the amount of current passing through the coil 46 remains substantially the same as that passing therethrough when the switch unit 62 was closed. A primary current path for this current is through a path including the diode 54 and the common inductor 50. This current path results because the diode 54 is forward biased with the opening of the switch unit 62.

With the closing of the switch unit 66, a secondary current is also developed through the coil 46 of the winding 42, but in the opposite direction of the primary current. That is, with the closing of the switch unit 66, a current path is provided from the rectified line voltage V through the diode 54, the winding coil 46, the winding coil 48, the switch unit 66, and the sensing resistor 72. A portion of the secondary current takes this current path while the remaining portion of the secondary current passes from the winding coil 46 to the common inductor 50. The magnitude of the primary current through the winding coil 46 is greater in magnitude than the secondary current through the winding coil 46 in the opposite direction. As a consequence, although the secondary current is in a direction from the cathode to the anode of the diode 54, the resulting current through the diode 54 is from anode to cathode. The transfer of energy from one of the motor windings 42, 44, in this example, from the winding 42, to another of the motor windings, namely winding 44, is in the form of that portion of the secondary current passing to the winding coil 48. This transfer of current reduces the amount of current required to be generated by the line voltage through the common inductor 50 when the switch unit 66 is closed. As a result, the dissipation of energy in the winding 42 and the common inductor 50 is minimized, and the efficiency of the stepping motor 40 is increased.

In the preferred embodiment, the inductance of the common inductor 50 is 2-5 times as great in magnitude as the inductance of each of the winding coils 46,46',48, 48'. In arriving at this preferred range, greater transfer of energy occurs from a previously excited winding to a subsequently excited winding when the inductance of the common inductor 50 is relatively much greater than the inductance of the winding coils 46,46', 48,48'. This result occurs essentially because the common inductor 50 and the subsequently excited winding coil, in the present example winding coil 48, are electrically in parallel. With such a parallel relationship, the magnitude of the secondary current through the subsequently excited winding coil becomes greater as the magnitude of the inductance of the common inductor 50 is increased relative to the inductance of the subsequently excited winding coil. However, the magnitude of the inductance of the common inductor 50 cannot be made too great, otherwise the current rise time through the common inductor is too large and the response time of the stepping motor 40 becomes unacceptable.

It should be appreciated that the present invention also minimizes energy losses at greater stepping rates of switch unit closures, unlike prior art drive or control circuits. At greater stepping rates with the accompanying change in the direction of magnetism, greater energy losses result in the conventional stepping motor. This energy is therefore not properly utilized. Such energy losses do not occur in the present invention because of the use of the common inductor 50 having a relatively large inductance. The inductor 50 effectively and efficiently handles the high frequency current due to the high switching rates so that magnetic losses resulting from the switching are less than prior art circuits.

It should also be understood from the foregoing that at the preferred fast stepping rate, the magnetic position of the motor is different from the expected, actual position of the motor shaft due to the fact that at any instance in time the current may be different than that current required to effect a desired motor shaft movement. However, because of the inertia associated with the mechanical hardware of the stepping motor, the motor shaft is unable to move rapidly enough in response to such current. Instead, the motor shaft reacts to an average current. As an end result, significant accuracy is still achieved with respect to obtaining a desired motor shaft position.

It should be further appreciated that the common inductor 50 permits the application of a relatively large rectified supply voltage to the stepping motor 40 without possible damage to the motor windings 42, 44. This occurs because a substantial portion of the rectified supply voltage remains across the common inductor 50 having a relatively large inductance. Relatedly, the common inductor 50 eliminates the need for a heavy transformer on the input side to the stepping motor 40. In so doing, the weight of the motor is appreciably reduced.

With respect to the opening and closing of the switch units 62-68, although more than one switch unit 62-68 may be closed at any one time, in the preferred operation only one switch unit 62-68 is closed at a given time and, therefore, only one sensing resistor 72 need be utilized because current is passing only through one switch unit 62-68 at a time. Relatedly, because only switch unit 62-68 is closed at one time, the amount of current transferred to the subsequently excited winding coil is maximized since the amount of current from the previously excited winding through the common inductor 50 is minimized.

Based on the foregoing description then, it is readily seen that the present invention is able to utilize previously generated energy in a subsequently excited motor winding. The circuit of the present invention and the operation thereof thereby increases the power efficiency of the stepping motor. An inductor common to both windings of the bifilar stepping motor is important in providing the desired transfer of current in the preferred embodiment. Additionally, because the common inductor is able to provide the same functions as a heavy transformer, the weight of the motor assembly is reduced as the rectified line voltage can be applied directly to the common inductor. Furthermore, high frequency current generated as a result of the relatively fast opening and closing of switches is properly handled by the large inductance of the common inductor and energy losses in the stepping motor are thereby reduced.

Although the present invention has been described with reference to a particular embodiment, it is appreciated that variations and modifications can be effected within the spirit and scope of the invention.

- 14 -

0178276

## Claims

1. A drive/control circuit for use with a motor including a first winding (42) having two coils (46, 46') and a second winding (44) having two coils (48, 48'), the motor being powered by line voltage, c h a r a c t e r - i z e d by a plurality of switch means (62, 64, 66, 68) including a first switch means (62, 64) controllably opened and closed and being electrically connected to said first winding (42) and a second switch means (66, 68) controllably opened and closed and being electrically connected to said second winding (44); and transfer means electrically connected to both the first and the second motor windings, said transfer means being in the path of current passing from the first winding after the opening of said first switch means and the closing of said second switch means for transferring current from the first winding to the second winding.

2. A drive/control circuit, as claimed in Claim 1, c h a r a c t e r i z e d in that only one of said plurality of switch means (62, 64, 66, 68) is closed at any one time.

3. A drive/control circuit, as claimed in Claim 1 or 2, c h a r a c t e r i z e d in that said transfer means includes inductor means (50) being electrically in parallel with the first motor winding (42) and the second motor winding (44).

4. A drive/control circuit, as claimed in Claim 3, c h a r a c t e r i z e d in that the inductance of said inductor means (50) is at least twice as great as the inductance of each of the coils (46, 46', 48, 48') of each of the first and second windings (42, 44).

5.    A drive/control circuit, as claimed in Claim 4, c h a r a c t e r i z e d  in that the inductance of said inductor means (50) is in the range of 2-5 times as great as the inductance of each of the coils of the first and second windings.

6.    A drive/control circuit, as claimed in Claim 3 to 5, c h a r a c t e r i z e d  in that said transfer means includes diode means (54, 56, 58, 60) and said inductor means (50) has two sides, one of said two sides being electrically connected to said diode means and the other of said two sides being electrically connected to the first motor winding (42) and the second motor winding (44).

7.    A drive/control circuit, as claimed in Claim 6, c h a r a c t e r i z e d  in that said diode means being interconnected in the path of a primary current through the first winding (42) and said inductor means (50) and also being interconnected in the path of a secondary current through the first winding (42) and the second winding (44) after the opening of said first switch means (62, 64) and the closing of said second switch means (66, 68).

8.    A drive/control circuit, as claimed in Claim 7, c h a r a c t e r i z e d  in that said diode means having an anode and a cathode, said diode means adapted to pass the secondary current from said cathode to said anode after said first switch means opens and said second switch means closes said secondary current being less in magnitude than said primary current.

9.    A drive/control circuit, as claimed in Claim 8, c h a r a c t e r i z e d  in that said diode means includes a number of diodes, each of said diodes being electrically connected to one of said two sides of said inductor means.

10.　　A drive/control circuit, as claimed in Claim 1 to 9, c h a r a c t e r i z e d  in that the opening of said first switch means (62, 64) and the closing of said second switch means (66, 68) is at a frequencey greater than the frequency of the current generated in the first and second windings (42, 44).

11.　　A drive/control circuit, as claimed in Claim 10, c h a r a c t e r i z e d  in that said rate of opening said first switch means (62, 64) and closing said second means (66, 68) is about 19,2 kHz.

FIG.I

PRIOR ART

FIG.2

CONTROLLER

FIG.3

PRIMARY CURRENT

SECONDARY
CURRENT